# FASCICULE DE BREVET EUROPEEN

(11) **EP 0 691 097 B1**
(45) Date de publication et mention de la délivrance du brevet: **13.08.1997**
(21) Numéro de dépôt: 95420188.5
(22) Date de dépôt: 05.07.1995
(51) Int. Cl.: A47J 27/08

(54) **Dispositif de commande de l'ouverture et de la fermeture des machoires de verrouillage pour un récipient sous pression**
Steuervorrichtung für das Öffnen und Schliessen der Klauenverriegelungselemente eines Druckgerätes
Device for controlling the opening and closing of the locking clamps on a pressure vessel

(30) Priorité: 06.07.1994 FR 9408585
(43) Date de publication de la demande: 10.01.1996
(73) Titulaire: SEB S.A., F-69132 Ecully (FR)
(72) Inventeur: Chameroy, Eric, F-21260 Veronnes (FR); Cartigny, Michel, F-21310 Mirebeau (FR)

(56) Documents cités:
- EP-A- 0 139 772
- EP-A- 0 491 324
- WO-A-92/03080
- DE-A- 3 232 907
- DE-A- 3 327 439

## Description

La présente invention se rapporte au domaine technique général des systèmes de verrouillage/déverrouillage d'un couvercle sur une cuve pour former un récipient de cuisson, de préférence sous pression, ainsi qu'aux dispositifs de commande du déplacement des mâchoires assurant le verrouillage.

La présente invention concerne un dispositif de commande de l'ouverture et de la fermeture de mâchoires montées mobiles radialement sur un couvercle par des bras entraîneurs, lesdites mâchoires étant destinées à assurer le verrouillage du couvercle sur une cuve pour fermer un récipient de cuisson, de préférence sous pression.

On connaît déjà, d'après la demande de brevet WO-92/03080 un récipient de cuisson sous pression mettant en oeuvre un dispositif de verrouillage/déverrouillage comportant des mâchoires montées mobiles radialement dans le couvercle. Les mâchoires, au nombre de deux, sont diamétralement opposées par rapport à l'axe longitudinal du récipient et aptes à venir enserrer dans leur position de fermeture le bord périphérique de la cuve pour fermer hermétiquement le récipient. Inversement, les mâchoires peuvent occuper une position de déverrouillage permettant l'ouverture du récipient. La commande du déplacement des mâchoires est assurée par un moyen de commande, à savoir un bouton monté mobile axialement sur le couvercle dans une position centrale. Le moyen de commande est pourvu de surfaces d'engagement spécialement conformées pour agir lors du déplacement du bouton de commande, sur des surfaces inclinées solidaires des mâchoires afin de les déplacer radialement. Un tel système de commande transforme donc de manière classique, un mouvement axial en un mouvement radial de déplacement des mâchoires entre une position de fermeture et d'ouverture.

Il peut être considéré qu'un tel dispositif apporte une contribution positive à l'amélioration des systèmes de verrouillage en position de fermeture des récipients de cuisson sous pression, notamment en ne nécessitant pas un positionnement relatif précis, tel qu'une indexation, entre le couvercle et la cuve. En revanche, un tel système s'avère mettre en oeuvre une série de pièces mobiles relativement, et en particulier radialement, pour assurer la commande de détachement des mâchoires. Les agencements proposés impliquent des combinaisons de mouvements, telles que des translations et des rotations, provoquant des risques de grippage importants et conduisant à des coûts de fabrication élevés et à une fiabilité de fonctionnement non optimale.

Il y a également lieu de noter que la mécanique de commande proposée ainsi que les déplacements relatifs des pièces nécessitent de la part de l'utilisateur un effort de commande relativement important.

De surcroît il s'avère que le dispositif de l'art antérieur décrit dans cette demande met en oeuvre un dispositif de commande du déplacement des mâchoires dont la sécurité d'utilisation ainsi que l'ergonomie ne sont pas optimales. En effet, le recours à un bouton de commande de l'ouverture et de la fermeture des mâchoires disposé en position centrale sur le couvercle et dont le déplacement axial par enfoncement commande à la fois la fermeture et l'ouverture des mâchoires, constitue une gêne sur le plan ergonomique pouvant entraîner des risques en matière de sécurité. Ainsi il apparaît que l'utilisation d'un même sens de commande pour assurer les deux fonctions opposées d'ouverture et de fermeture des mâchoires ne permet pas à l'utilisateur de mémoriser, de manière naturelle et instinctive, une association différenciée entre une action manuelle (poussée) et un résultat technique (fermeture-ouverture). Dans le cas présent un même geste correspond à un résultat différent. Le bouton de commande qui assure également un rôle d'organe de préhension de l'ensemble du récipient, peut inciter un utilisateur à transporter le récipient sous pression par cet organe et peut même, par inadvertance, en raison de la difficulté de mémorisation citée précédemment, l'inciter à manipuler l'organe de commande avec tous les risques d'ouverture que cela comporte.

L'objet de l'invention vise en conséquence à porter remède aux divers inconvénients énumérés précédemment et à proposer un nouveau dispositif de commande de l'ouverture et de la fermeture des mâchoires dont la gestuelle de commande différencie les opérations de fermeture et d'ouverture et dont la sécurité de manipulation, notamment pendant le transport du récipient, est améliorée.

Un autre objet de l'invention est d'améliorer la différenciation gestuelle nécessaire pour commander le déplacement des mâchoires de verrouillage.

Un autre objet de l'invention est d'améliorer l'ergonomie générale du dispositif de commande.

Les objets assignés à l'invention sont atteints à l'aide d'un dispositif de commande de l'ouverture et de la fermeture de mâchoires montées mobiles radialement sur un couvercle par des bras entraîneurs eux mêmes mobiles radialement, lesdites mâchoires étant destinées à assurer le verrouillage du couvercle sur une cuve pour fermer un récipient de cuisson, de préférence sous pression, ledit dispositif comportant un organe de commande mobile selon une course déterminée entre une première position pour laquelle les mâchoires sont en position de verrouillage et une deuxième position pour laquelle les mâchoires sont en position de déverrouillage, caractérisé en ce que l'organe de commande est monté mobile selon une direction sensiblement radiale sur le couvercle.

D'autres particularités et avantages de l'invention apparaîtront et ressortiront plus en détail à la lecture de la description faite ci-après, en référence aux dessins annexés, donnés à titre d'exemples illustratifs et non limitatifs dans lesquels :
- La figure 1 montre, selon une vue générale en coupe transversale, la partie supérieure d'un récipient de cuisson pourvu du dispositif de commande conforme à l'invention.
- La figure 2 montre, selon une vue de dessus, un récipient de cuisson pourvu du dispositif de commande selon l'invention, dans lequel les mâchoires sont en position de verrouillage.
- La figure 3 montre, selon une vue de dessus identique à celle de la figure 2, le dispositif de commande conforme à l'invention, les mâchoires étant en position de déverrouillage.
- La figure 4 montre, selon une vue en coupe partielle, un détail du dispositif de commande conforme à l'invention.

Le dispositif de verrouillage/déverrouillage conforme à l'invention est destiné à assurer la fermeture par verrouillage d'un couvercle 1 sur une cuve 2 de manière à former un récipient de cuisson, de préférence sous pression tel qu'un autocuiseur. Le récipient est par exemple constitué d'une cuve de forme sensiblement cylindrique, d'axe de révolution x-x', sur laquelle le couvercle 1 est destiné à être rapporté de manière étanche, par exemple par l'intermédiaire d'un joint d'étanchéité à lèvres 3.

La cuve 2 est de manière classique réalisée à partir d'un matériau métallique tel que de l'inox et pourvu d'un fond thermoconducteur solidaire de la cuve 2, par exemple par frappe à chaud. La cuve comporte également des organes de préhension tels que des poignées 5 fixées sur les parois de la cuve 2 par l'intermédiaire de pattes d'attaches 6 et de vis 7.

Le couvercle 1 comporte un disque de fermeture 8 profilé, pourvu à sa périphérie d'une zone en forme de gorge 9 servant de siège de réception du joint d'étanchéité à lèvres 3, et assumant avec ce dernier l'étanchéité de la fermeture du couvercle 1.

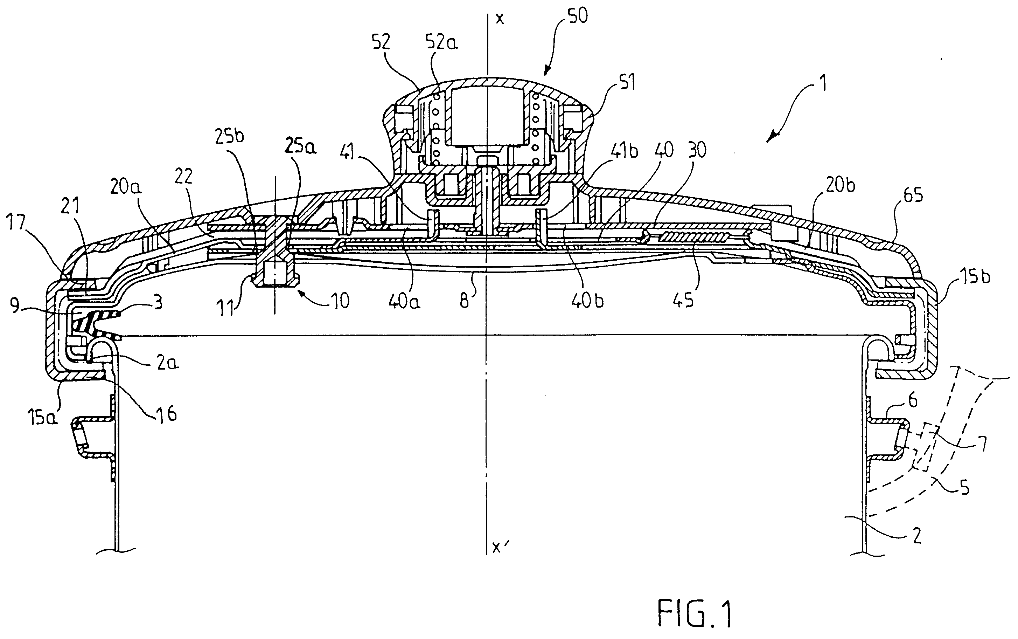

Le disque de fermeture 8 est pourvu d'au moins un perçage permettant le passage et le montage d'une soupape de verrouillage 10 montée à coulissement libre axial dans ledit perçage entre une position basse de butée (telle que montrée à la figure 1 par exemple), et une position haute de butée.
La soupape de verrouillage 10 peut être constituée tel que cela est bien connu dans l'art antérieur d'un doigt de sécurité dont la fonction principale est de fournir une information visuelle de la pression régnant dans le récipient sous pression.

Avantageusement l'étanchéité à la vapeur, entre la soupape de verrouillage 10 et le perçage est améliorée par interposition d'un joint 11, ce dernier étant maintenu en position par appui sur une collerette 12 formant la partie radiale externe inférieure de la soupape de verrouillage 10.

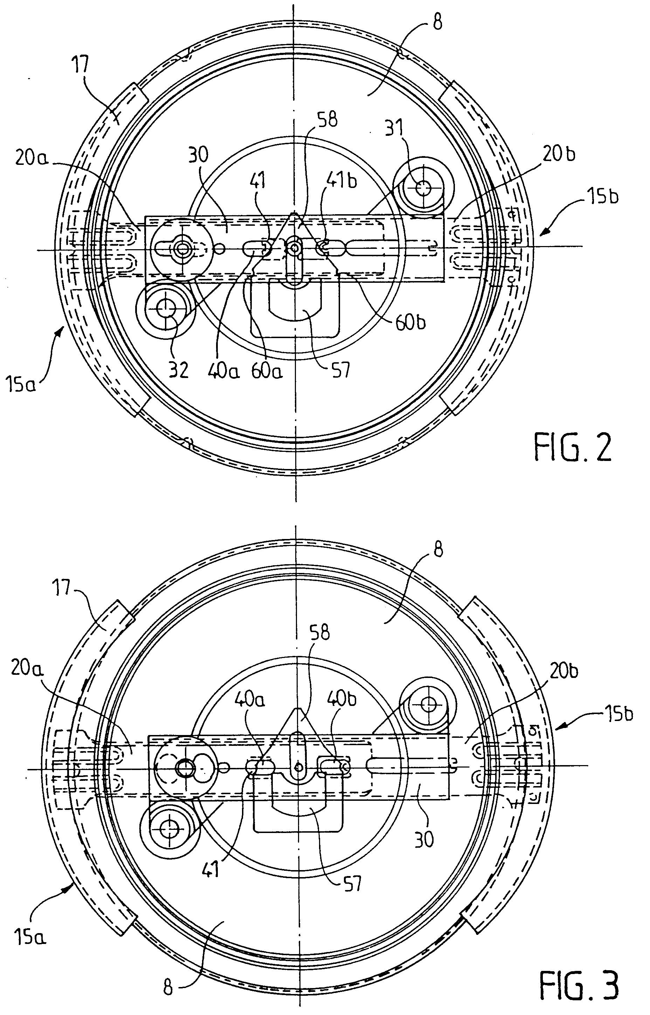

Le couvercle 1 comporte également au moins deux mâchoires 15a, 15b, montées radialement mobiles sur le disque de fermeture 8 entre une position de verrouillage du couvercle 1 sur la cuve 2 (figures 1 et 2) et une position de déverrouillage (figure 3). Les mâchoires 15a, 15b, se présentent de manière classique sous la forme de segments de profils en U adaptés à la forme du récipient, et dans le cas montré aux figures, sous la forme d'arcs de cercles de longueur déterminée. Chaque mâchoire 15 comporte un rebord inférieur 16 et un rebord supérieur 17 permettant d'enserrer respectivement le rebord périphérique 2a de la cuve 2 et la limite supérieure de la gorge 9. Chaque mâchoire 15a, 15b, est montée mobile sur le couvercle par l'intermédiaire d'éléments entraîneurs incluant des bras entraîneurs associés 20a, 20b, diamétralement opposés et solidaires par une extrémité 21, par exemple par soudage, du rebord supérieur 17. Dans la version préférentielle de l'invention montrée aux figures 1 à 4, chaque bras entraîneur 20a, 20b, se présente sous la forme d'un profilé métallique par exemple rectiligne, de profil adapté à celui du disque de fermeture 8 et de section transversale en U, dont l'âme est tournée vers l'extérieur du récipient et dont les ailes 22 s'étendent également vers l'extérieur du récipient.

Selon une version préférentielle de l'invention, les bras entraîneurs 20a, 20b, présentent une longueur suffisante de manière à pouvoir être superposés, au moins en partie, lors de leur déplacement radial. Selon cette variante les bras entraîneurs 20a, 20b, sont autoguidés radialement l'un dans l'autre, le bras 20a formant le bras mâle et le 20b formant le bras femelle, le bras mâle coulissant dans le bras femelle. Le guidage relatif des bras 20a, 20b, est obtenu par coopération et frottement des ailes 22 de chacun des bras 20a, 20b. Un tel montage permet bien évidemment de réduire les risques de déformation possible lors du coulissement radial de chacun des bras 20a, 20b, et de maîtriser parfaitement le déplacement linéaire de chaque mâchoire 15a, 15b.

Selon cette version préférentielle de l'invention, chaque bras entraîneur, 20a, 20b, est pourvu d'une lumière de verrouillage 25a, 25b, ménagée à travers l'âme de chaque bras. La position de chaque lumière 25a, 25b est déterminée en fonction de la longueur de chaque bras 20a, 20b pour que les lumières 25a, 25b soient en position d'alignement lorsque les mâchoires 15a, 15b, sont en position de verrouillage. Simultanément la position des lumières 25a, 25b, ainsi que la position du perçage, et donc de la soupape 10, est choisie pour que lorsque les mâchoires 15a et 15b sont en position de verrouillage, les lumières 25a, 25b, ainsi que le perçage soient alignés. Cette disposition permet à la soupape de verrouillage 10 d'occuper la position déterminée correspondant à la pression régnant dans le récipient, et en particulier d'occuper sa position haute dans laquelle la soupape 10 s'engage chacune des lumières 25a, 25b, pour verrouiller les mâchoires dans leur position de verrouillage. Une telle position n'est bien évidemment acquise que lorsque les mâchoires 15a, 15b, occupent avec précision leur position de verrouillage qui seule permet le passage de la soupape 10 simultanément dans les lumières 25a, 25b. Dans le cas où l'alignement des lumières 25a, 25b n'est pas obtenu lors de la tentative de fermeture, la soupape de verrouillage 10 ne peut monter ce qui génère une fuite de vapeur hors du récipient empêchant toute montée en pression.

Avantageusement, le guidage du mouvement linéaire et radial des bras entraîneurs 20a, 20b, est assuré par des moyens de guidage supplémentaires qui sont solidaires du couvercle 1.

Selon une variante préférentielle de l'invention, les moyens de guidage sont formés par une pièce de support 30 qui enserre les bras entraîneurs 20a, 20b, sur la majeure partie de leur longueur.

Selon une version préférentielle de l'invention, la pièce support 30 est formée d'une plaque de section transversale en U enserrant et recouvrant les bras entraîneurs 20a, 20b, la face interne de l'âme du U étant tournée vers le disque de fermeture 8. La plaque support 30 est avantageusement solidaire du disque de fermeture 8 par l'intermédiaire de deux points d'ancrage 31, 32, situés de part et d'autre de l'axe longitudinal de la plaque support 30. Les points d'ancrage 31, 32, peuvent être constitués de moyens de fixations tels que des vis, ou au contraire également servir de siège pour le passage de moyens de régulation de la pression.

A titre de variante il est également possible de monter la plaque de support 30 de manière inversée, la face interne de la plaque support 30 étant tournée vers l'extérieur du récipient, les bras 20a, 20b, coulissant l'un dans l'autre ainsi que dans ladite plaque support. Dans cette position, la plaque support 30 enserre et supporte les bras 20a,20b.

Selon une autre variante de réalisation, les moyens de guidage peuvent être constitués de rampes ou de moyens équivalents, solidaires ou partie intégrante du disque de fermeture 8.

Dans tous les cas, et en particulier dans le cas où une plaque support 30, présentant un profil en U est utilisée, les moyens de guidage assument, outre une fonction d'aide supplémentaire au coulissement linéaire des bras entraîneurs 20a, 20b, une fonction complémentaire de rigidification de l'ensemble mécanique assurant le déplacement radial des mâchoires 15a, 15b.

La course de déplacement des bras entraîneurs 20a, 20b, entre chacune de leur position limite, correspondant à la position d'ouverture et de fermeture des mâchoires 15a, 15b, est limitée par l'intermédiaire d'une fente 40, ménagée de préférence dans le bras mâle 20a, dans laquelle peut se déplacer un ergot 41 solidaire du bras femelle 20b. La course de déplacement des bras 20a, 20b, est ainsi limitée par la mise en butée de l'ergot 41 contre l'une ou l'autre des deux extrémités de la fente 40.

Selon un mode de réalisation particulier la plaque support 30 comporte une ouverture alignée avec les lumières 25a, 25b, ainsi qu'avec le perçage, permettant le montage en suspension de la soupape de verrouillage 10, par sa partie supérieure de section réduite par rapport à la partie inférieure de la soupape de verrouillage 10. Un tel montage permet le coulissement relatif des bras entraîneurs 20a, 20b, lorsque la soupape de verrouillage 10 est dans sa position basse, ce qui assure simultanément le libre déplacement des mâchoires 15a, 15b.

Avantageusement les bras entraîneurs 20a, 20b, sont ramenés en permanence en position de verrouillage par un moyen de rappel élastique constitué par exemple d'un ressort 45 interposé entre deux jambages respectivement solidaires de chacun des bras entraîneurs 20a, 20b.

Le dispositif de verrouillage/déverrouillage conforme à l'invention comporte également un moyen de commande 50 du mouvement des mâchoires 15a, 15b, permettant d'amener chaque mâchoire dans l'une ou l'autre de leur position fixe de verrouillage/déverrouillage.

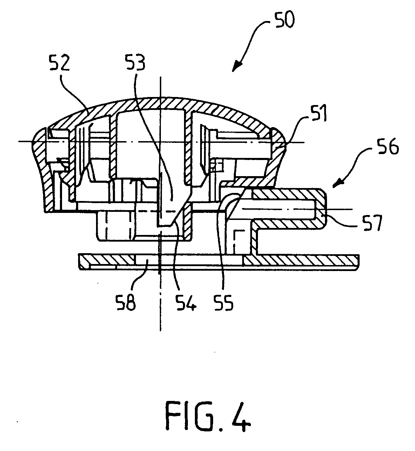

Selon une version préférentielle de l'invention telle que montrée à la figure 4, le moyen de commande 50 forme l'organe de préhension du couvercle 1 et est constitué d'un organe de commande 56 monté mobile selon une direction sensiblement radiale sur le couvercle 1 et couplé cinématiquement avec un bouton de commande 52 monté mobile sur le couvercle 1 selon une direction sensiblement axiale.

Le moyen de commande 50 est constitué d'un pommeau 51 solidaire du couvercle 1, et du bouton de commande 52 monté mobile axialement et élastiquement par un ressort de rappel 52a dans le pommeau 51. Le ressort de rappel 52a maintient le bouton de commande 52 dans la position haute montrée à la figure 4. Le bouton de commande 52 comporte à sa partie inférieure un doigt d'actionnement 53 pourvu d'une surface d'engagement inclinée 54 destinée à venir engager lors de l'enfoncement du bouton de commande 52 une surface d'engagement complémentaire 55 ménagée sur l'organe de commande 56. L'organe de commande 56 est monté sur le couvercle 1 selon une course déterminée de manière à être amené, lors de son déplacement entre les deux limites définissant sa course, à engager les bras entraîneurs 20a, 20b de façon à commander leur déplacement radial.

Selon une version préférentielle de l'invention l'organe de commande 56 assure le déplacement radial des bras entraîneurs 20a, 20b, de manière active dans le sens radial externe c'est-à-dire dans un sens correspondant à l'écartement progressif des mâchoires 15a, 15b pour atteindre leur position extrême de déverrouillage. Selon cette version préférentielle de l'invention, l'organe de commande 56 est couplé cinématiquement avec le bouton de commande 52 dont le déplacement selon la direction sensiblement axiale définie précédemment, commande le déplacement des bras entraîneurs 20a, 20b, dans le sens radial interne, c'est-à-dire dans un sens de déplacement des mâchoires en direction de leur position de verrouillage. A cette fin l'organe de commande 56 est formé par un poussoir monté sous le pommeau 51. Le poussoir 56 présente une zone de commande 57 surélevée et accessible manuellement par l'utilisateur, ainsi qu'une zone triangulaire 58 d'actionnement plane apte à venir engager des moyens d'actionnement solidaires des bras entraîneurs 20a, 20b.

Selon une variante préférentielle de l'invention, les moyens d'actionnement sont constitués par l'ergot 41 et par un ergot 41b homologue, solidaire du bras entraîneur 20b. Le déplacement de la zone triangulaire 58 selon une direction radiale à double sens permet ainsi de déplacer également radialement les ergots 41, 41 b mais selon une direction orientée à 90° par rapport à la direction de déplacement du poussoir 56. Par le biais de la zone triangulaire 58, le poussoir 56 engage par conséquent de manière active les bras entraîneurs 20a, 20b et assure progressivement leur écartement lorsque l'utilisateur appuie sur la zone de commande 57. Lorsque les moyens de guidage sont formés par une plaque support 30 recouvrant les bras entraîneurs 20a, 20b, la plaque support 30 comporte deux ouvertures 40a, 40b, ménagées dans l'âme de ladite plaque, et destinées au passage, respectivement des ergots 41, 41b, pour permettre leur déplacement radial. Les ouvertures 40a, 40b ont pour fonction secondaire de limiter la course de déplacement individuel de chaque bras 20a, 20b en servant de butée aux ergots 41, 41b, évitant ainsi le désengagement des mâchoires 15a, 15b hors du couvercle 1.

Avantageusement, la zone d'actionnement triangulaire 58 comporte deux évidements 60a, 60b, par exemple semi-circulaires, et dans tous les cas de forme complémentaire à celle des ergots 41, 41b, de manière à déterminer une position stable et fixe d'ouverture des mâchoires correspondant à un blocage en position desdits ergots dans les évidements correspondants 60a, 60b.

Lors de l'enfoncement du bouton de commande 52 le doigt d'actionnement 53, lorsque les mâchoires 15a, 15b sont en position de déverrouillage, vient engager la surface d'engagement complémentaire 55 pour commander le désarmement du poussoir 56. Le désarmement correspond à une sortie des ergots 41, 41 b hors des évidements 60a, 60b, le doigt d'actionnement 53 formant ainsi des moyens de relâchement alors que les évidements 60a, 60b forment des moyens de blocage.

Selon la version préférentielle de l'invention montrée aux figures 1 à 4, l'organe de commande 56 et le bouton de commande 52 sont montés sur le couvercle en position centrale pour former un ensemble de préhension du couvercle.

A titre de variante il est bien évidemment possible de dissocier l'ensemble de préhension du couvercle, de l'organe de commande 56 et du bouton de commande 52.

A titre de variante complémentaire il est bien évidemment également possible, sans sortir du cadre de l'invention, de réaliser un dispositif de commande comportant un seul organe de commande 56 capable d'assurer à lui seul la commande dans les deux sens du déplacement radial des bras entraîneurs 20a, 20b. Selon cette variante l'organe de commande 56 assure le déplacement des bras entraîneurs 20a, 20b de manière active dans le sens radial externe et dans le sens radial interne défini précédemment. L'organe de commande 56 est alors constitué d'un simple bouton poussoir dont le profil permet à l'utilisateur par simple poussée ou tirage d'assurer l'écartement ou la rétraction des mâchoires 15a, 15b.

Le couvercle 1 peut compter une plaque d'habillage 65 recouvrant l'ensemble du mécanisme, ladite plaque étant prise en sandwich entre la plaque support 30 et le pommeau 51.

Le fonctionnement du dispositif de verrouillage/ déverrouillage conforme à l'invention est le suivant.

La mise en place du couvercle 1 sur la cuve 2 nécessite l'ouverture des mâchoires 15a, 15b, et l'actionnement radial du poussoir 56 ce qui permet de faire coulisser la zone d'actionnement triangulaire 58 qui vient progressivement engager par ses flancs les ergots 41, 41b (figure 2). Le déplacement progressif du poussoir 56 permet d'écarter progressivement les bras entraîneurs 20a, 20b, et simultanément les mâchoires 15a, 15b. La translation du poussoir 56 selon une direction radiale permet donc la translation des deux mâchoires 15a, 15b selon une direction également radiale, mais perpendiculaire à la direction du déplacement du poussoir 56. La fin de la translation est déterminée par le positionnement de chaque ergot 41, 41b, dans les évidements associés 60a, 60b (figure 2). Au delà de cette translation la position limite des mâchoires 15a, 15b est également déterminée par la mise en butée de l'ergot 41 contre l'extrémité de la fente 40. Dans la position ainsi atteinte, les mâchoires 15a, 15b sont en position stable de déverrouillage et permettent ainsi un centrage du couvercle 1 sur le bord de la cuve 2.

La fermeture du récipient, c'est-à-dire l'atteinte par les mâchoires 15a, 15b, de leur position de verrouillage, est obtenue par pression de la paume de la main sur le bouton de pommeau 52 qui est par conséquent actionné axialement. Son enfoncement dans le pommeau 51 provoque l'engagement de la surface d'engagement 54 avec sa surface complémentaire 55 ménagée sur le bouton poussoir 56, lequel va progressivement reculer selon une direction radiale externe. Au cours de cette translation en sens inverse, les ergots 41, 41b, sont tout d'abord libérés des évidements 60a, 60b, les mâchoires 15a, 15b, étant ensuite progressivement rappelées l'une vers l'autre vers leur position de verrouillage (figures 2 et 4). Le rappel vers cette position de verrouillage est obtenu par l'action de rappel du ressort 45 permettant le positionnement de chaque mâchoire 15a, 15b, entre le couvercle 1 et sous le rebord 2a de la cuve 2.

Le récipient étant ainsi fermé de manière étanche, la pression peut désormais monter et provoquer le passage de la soupape de verrouillage 10 dans sa position haute à travers les lumières 25a, 25b, lesquelles en position de fermeture complète des mâchoires 15a, 15b, sont coaxiales. L'engagement de la soupape de verrouillage 10 à travers les lumières 25a, 25b permet de verrouiller en position chacun des bras entraîneurs 20a, 20b, et simultanément chaque mâchoire correspondante.

Le dispositif de verrouillage/déverrouillage conforme à l'invention permet ainsi d'assurer une montée en pression en toute sécurité puisque le passage de la soupape de verrouillage dans les lumières de verrouillage 25a, 25b, ne peut intervenir que si les bras d'entraînement 20a, 20b, et donc les mâchoires 15a, 15b, sont en position de verrouillage parfaite. La soupape de verrouillage 10 s'oppose par ailleurs à tout déplacement radial des mâchoires 15a, 15b. Le déplacement radial et linéaire des bras entraîneurs 20a, 20b, est par ailleurs obtenu sans risque de déformation en raison de la présence d'une succession de moyens de guidage formés par le coulissement des bras intérieurs l'un à l'autre et par la plaque support 30.

A titre de variante complémentaire, il est évidemment possible d'avoir recours à des bras entraîneurs 20a, 20b qui ne sont pas montés relativement l'un par rapport à l'autre en position de chevauchement, le verrouillage étant obtenu à l'aide d'une soupape de verrouillage 10 associée à chacun des bras entraîneurs 20a, 20b.

La dissociation de la gestuelle nécessaire au verrouillage des mâchoires 15a, 15b (action de poussée axiale ou tirage radial), de celle nécessaire au déverrouillage (action de poussée radiale), évite, grâce à sa mémorisation naturelle, les erreurs de manipulation.

## Revendications

1. Dispositif de commande de l'ouverture et de la fermeture de mâchoires (15a, 15b) montées mobiles radialement sur un couvercle (1) par des bras entraîneurs (20a, 20b) eux-mêmes mobiles radialement, lesdites mâchoires (15a, 15b) étant destinées à assurer le verrouillage du couvercle (1) sur une cuve (2) pour fermer un récipient de cuisson, de préférence sous pression, ledit dispositif comportant un organe de commande (56) mobile selon une course déterminée entre une première position pour laquelle les mâchoires (15a, 15b) sont en position de verrouillage et une deuxième position pour laquelle les mâchoires (15a, 15b) sont en position de déverrouillage, caractérisé en ce que l'organe de commande (56) est monté mobile selon une direction sensiblement radiale sur le couvercle (1).

2. Dispositif selon la revendication 1 caractérisé en ce que l'organe de commande (56) est apte à assurer le déplacement des bras entraîneurs (20a, 20b) de manière active dans le sens radial externe par l'entremise d'une zone d'actionnement (58) et dans le sens radial interne par l'action d'un ressort de rappel (45).

3. Dispositif selon la revendication 2 caractérisé en ce que la zone d'actionnement (58) est triangulaire.

4. Dispositif selon l'une des revendications 2 ou 3 caractérisé en ce que la zone d'actionnement (58) permet à l'organe de commande (56) d'engager activement les bras entraîneurs (20a, 20b) pour assurer l'écartement de ces derniers en agissant sur des ergots (41,41b) solidaires des bras entraîneurs.

5. Dispositif selon l'une des revendications 1 à 4 caractérisé en ce que l'organe de commande (56) comporte des moyens de blocage des bras entraîneurs (20a, 20b) en position de déverrouillage.

6. Dispositif selon la revendication 5 caractérisé en ce que les moyens de blocage sont formés par des évidements (60a, 60b) coopérant avec les ergots (41, 41b) solidaires des bras entraîneurs (20a, 20b).

7. Dispositif selon la revendication 6 caractérisé en ce que les évidements (60a, 60b) sont ménagés dans la zone triangulaire (58).

8. Dispositif selon l'une des revendications 1 à 7 caractérisé en ce que l'organe de commande (56) est un poussoir apte à être commandé manuellement.

9. Dispositif selon l'une des revendications 1 à 8 caractérisé en ce que l'organe de commande (56) est couplé cinématiquement avec un bouton de commande (52) monté mobile sur le couvercle (1) selon une direction sensiblement axiale et apte à commander le déplacement des bras entraîneurs (20a, 20b) dans le sens radial interne.

10. Dispositif selon la revendication 9 caractérisé en ce que le bouton de commande (52) est mobile axialement de manière active par enfoncement.

11. Dispositif selon la revendication 9 ou 10 lorsque dépendante de l'une des revendications 5 à 7, caractérisé en ce que le bouton de commande (52) comporte des moyens de relâchement pour commander le désarmement des moyens de blocage.

12. Dispositif selon la revendication 11 caractérisé en ce que les moyens de relâchement comprennent un doigt d'actionnement (53) apte à engager l'organe de commande (56) lors de l'enfoncement axial du bouton de commande (52).

13. Dispositif selon l'une des revendications 9 à 12 caractérisé en ce que l'organe de commande (56) et le bouton de commande (52) sont montés sur le couvercle (1) en position centrale pour former son ensemble de préhension.

14. Récipient de cuisson, de préférence sous pression, tel qu'un autocuiseur, comportant un dispositif conforme à l'une des revendications 1 à 13.

## Claims

1. A control device for opening and closing jaws (15a, 15b) mounted on a lid (1) to move radially by means of driving arms (20a, 20b) themselves mounted to move radially, said jaws (15a, 15b) serving to lock the lid (1) on a bowl (2) so as to close a receptacle for cooking, preferably under pressure, said device including a control member (56) mounted to move over a determined stroke between a first position in which the jaws (15a, 15b) are in the locking position and a second position in which the jaws (15a, 15b) are in the unlocking position, said control device being characterized in that the control member (56) is mounted on the lid (1) to move substantially radially.

2. A device according to claim 1, characterized in that the control member (56) is suitable for actively displacing the driving arms (20a, 20b) radially outwards by means of the interposition of an actuating zone (58), and radially inwards by means of the action of a return spring (45).

3. A device according to claim 2, characterized in that the actuating zone (58) is triangular.

4. A device according to claim 2 or 3, characterized in that the actuating zone (58) enables the control member (56) to engage the driving arms (20a, 20b) actively to move said arms apart by acting on lugs (41, 41b) integral with the driving arms.

5. A device according to any one of claims 1 to 4, characterized in that the control member (56) includes securing means for securing the driving arms (20a, 20b) in the unlocking position.

6. A device according to claim 5, characterized in that the securing means are formed by recesses (60a, 60b) for co-operating with the lugs (41, 41b) integral with the driving arms (20a, 20b).

7. A device according to claim 6, characterized in that the recesses (60a, 60b) are provided in the triangular zone (58).

8. A device according to any one of claims 1 to 7, characterized in that the control member (56) is a pusher suitable for being controlled manually.

9. A device according to any one of claims 1 to 8, characterized in that the control member (56) is drivingly coupled to a control button (52) mounted on the lid (1) to move substantially axially, and suitable for causing the driving arms (20a, 20b) to be displaced radially inwards.

10. A device according to claim 9, characterized in that the control button (52) is mounted to move axially in active manner by being pushed.

11. A device according to claim 9 or 10, as dependent on any one of claims 5 to 7, characterized in that the control button (52) includes releasing means for causing the securing means (60) to be inactivated.

12. A device according to claim 11, characterized in that the releasing means include an actuating finger (53) suitable for engaging the control member (56) on axially pushing the control button (52).

13. A device according to any one of claims 9 to 12, characterized in that the control member (56) and the control button (52) are mounted on the lid (1) in a central position so as to form a graspable assembly by means of which the lid can be grasped.

14. A receptacle for cooking, preferably for under pressure, such as a pressure cooker, including a device according to any one of claims 1 to 13.

## Patentansprüche

1. Vorrichtung zum Steuern des Öffnens und des Schließens von Klemmbacken (15a, 15b), die radial beweglich an einem Deckel (1) mittels Mitnehmerarmen (20a, 20b) angebracht sind, die ihrerseits radial beweglich sind, wobei die Klemmbacken (15a, 15b) dafür vorgesehen sind, das Verriegeln des Deckels (1) auf einem Topf (2) zu gewährleisten, um einen Kochbehälter zu verschließen, vorzugsweise einen Druckkochbehälter, wobei die Vorrichtung ein Steuerorgan (56) aufweist, das um einen vorbestimmten Weg zwischen einer ersten Stellung, in der sich die Klemmbacken (15a, 15b) in der Verriegelungsstellung befinden, und einer zweiten Stellung beweglich ist, in der sich die Klemmbacken (15a, 15b) in der entriegelten Stellung befinden, dadurch gekennzeichnet, daß das Steuerorgan (56) an dem Deckel (1) in einer im wesentlichen radialen Richtung bewegbar angebracht ist.

2. Vorrichtung nach Anspruch 1, dadurch gekennzeichnet, daß das Steuerorgan (56) dafür ausgelegt ist, die Verstellung der Mitnehmerarme (20a, 20b) in aktiver Weise in der radialen Richtung nach außen unter Verwendung einer Betätigungszone (58) und in der radialen Richtung nach innen durch die Wirkung einer Rückstellfeder (45) zu gewährleisten.

3. Vorrichtung nach Anspruch 2, dadurch gekennzeichnet, daß die Betätigungszone (58) dreieckig ist.

4. Vorrichtung nach einem der Ansprüche 2 und 3, dadurch gekennzeichnet, daß die Betätigungszone (58) dem Steuerorgan (56) ermöglicht, aktiv an den Mitnehmerarmen (20a, 20b) anzugreifen, um das Auseinanderbewegen von diesen zu gewährleisten, indem auf fest mit den Mitnehmerarmen verbundene Vorsprünge (41, 41b) eingewirkt wird.

5. Vorrichtung nach einem der Ansprüche 1 bis 4, dadurch gekennzeichnet, daß das Steuerorgan (56) Mittel zum Blockieren der Mitnehmerarme (20a, 20b) in der entriegelten Stellung enthält.

6. Vorrichtung nach Anspruch 5, dadurch gekennzeichnet, daß die Blockiermittel durch Aussparungen (60a, 60b) gebildet sind, die mit den fest mit den Mitnehmerarmen (20a, 20b) verbundenen Vorsprüngen (41, 41b) zusammenwirken.

7. Vorrichtung nach Anspruch 6, dadurch gekennzeichnet, daß die Aussparungen (60a, 60b) in der dreieckigen Zone (58) ausgebildet sind.

8. Vorrichtung nach einem der Ansprüche 1 bis 7, dadurch gekennzeichnet, daß das Steuerorgan (56) eine Taste ist, die manuell betätigt werden kann.

9. Vorrichtung nach einem der Ansprüche 1 bis 8, dadurch gekennzeichnet, daß das Steuerorgan (56) kinematisch mit einem Steuerknopf (52) gekoppelt ist, der in einer im wesentlichen axialen Richtung beweglich am Deckel (1) angebracht ist und die Verstellung der Mitnehmerarme (20a, 20b) in der radialen Richtung nach innen steuern kann.

10. Vorrichtung nach Anspruch 9, dadurch gekennzeichnet, daß der Steuerknopf (52) durch Eindrücken aktiv in axialer Richtung bewegbar ist.

11. Vorrichtung nach Anspruch 9 oder Anspruch 10, soweit auf einen der Ansprüche 5 bis 7 rückbezogen, dadurch gekennzeichnet, daß der Steuerknopf (52) Lösemittel aufweist, um das Entspannen der Blockiermittel zu steuern.

12. Vorrichtung nach Anspruch 11, dadurch gekennzeichnet, daß die Lösemittel einen Betätigungszapfen (53) aufweisen, der an dem Steuerorgan (56) beim axialen Eindrücken des Steuerknopfs (52) angreifen kann.

13. Vorrichtung nach einem der Ansprüche 9 bis 12, dadurch gekennzeichnet, daß das Steuerorgan (56) und der Steuerknopf (52) mittig an dem Deckel (1) angebracht sind, um an diesem einen Griff zu bilden.

14. Kochbehälter, vorzugsweise Druckkochbehälter, beispielsweise ein Dampfkochtopf, enthaltend eine Vorrichtung nach einem der Ansprüche 1 bis 13.
